# EUROPÄISCHE PATENTSCHRIFT

(11) **EP 1 363 719 B1**
(45) Veröffentlichungstag und Bekanntmachung des Hinweises auf die Patenterteilung: **23.08.2006**
(21) Anmeldenummer: 02722125.8
(22) Anmeldetag: 22.02.2002
(51) Int. Cl.: B01D 46/42, B01D 46/00, B01D 46/24

(54) **ÖLABSCHEIDER FÜR ÖLÜBERFLUTETE PUMPEN**
OIL SEPARATOR FOR PUMPS OVERFLOWING WITH OIL
SEPARATEUR D'HUILE POUR POMPES A DEBORDEMENT D'HUILE

(30) Priorität: 23.02.2001 DE 20103261 U
(43) Veröffentlichungstag der Anmeldung: 26.11.2003
(73) Patentinhaber: Rietschle Thomas GmbH + Co. KG, 79650 Schopfheim (DE)
(72) Erfinder: BÜRGIN, Andreas, 79592 Fischingen (DE); KUNY, Markus, 79618 Rheinfelden (DE)
(74) Vertreter: Rau, Albrecht
(86) Internationale Anmeldenummer: PCT/EP2002/001933
(87) Internationale Veröffentlichungsnummer: WO 2002/068091

(56) Entgegenhaltungen:
- EP-A- 1 034 830
- DE-A- 3 445 400
- DE-A- 19 823 339

## Beschreibung

Die Erfindung betrifft einen Ölabscheider für ölüberflutete Pumpen, insbesondere Drehschieber-Vakuumpumpen, mit einem Filtergehäuse und mehreren darin angeordneten Filterpatronen, die von dem Fördermedium durchströmt werden.

Bei ölüberfluteten Pumpen, insbesondere Drehschieber-Vakuumpumpen, wird das Fördermedium druckseitig durch einen Ölabscheider geleitet, um es von mitgefördertem Öl zu befreien und dieses in das Ölbad zurückzuführen. Der Ölabscheider ist im wesentlichen durch eine Batterie von Filterpatronen gebildet, die in einem Filtergehäuse angeordnet sind und von dem Fördermedium durchströmt werden. In regelmäßigen Abständen müssen die Filterpatronen ausgewechselt werden. Das Filtergehäuse hat einen Gehäusedeckel oder speziellen Wartungsdeckel, der nach Lösen einiger Befestigungsschrauben abgenommen werden kann, um die Filterpatronen zugänglich zu machen. Jede Filterpatrone ist durch einen schraubbaren Kunststoffhalter im Filtergehäuse befestigt. Nach Lösen des Kunststoffhalters kann die Filterpatrone aus dem Filtergehäuse herausgezogen werden.

Aus der DE-A-34 45 400 ist ein Ölabscheider bekannt, bei dem eine Abscheidepatrone an einem Kopf befestigt ist, der einen Kessel oben abschließt. In dem Kopf sind seitliche Bohrungen vorgesehen, die fluidisch mit in dem Kesselmantel vorgesehenen Auslässen für Luft bzw. Restöl verbunden sind.

Durch die Erfindung wird ein Ölabscheider für ölüberflutete Pumpen zur Verfügung gestellt, bei dem der Austausch der Filterpatronen wesentlich vereinfacht wird. Gemäß der Erfindung sind die Filterpatronen durch je eine Öffnung in einer äußeren Gehäusewand des Filtergehäuses eingesetzt und an der Gehäusewand lösbar sowie mediendicht befestigt. Die Filterpatronen verschließen die Öffnungen mediendicht. Jede Filterpatrone ist somit unmittelbar an der Gehäusewand des Filtergehäuses zugänglich, so daß beim Filterwechsel die Demontage eines Gehäuse- oder Wartungsdeckels entfällt. Dadurch wird das Auswechseln der Filterpatronen sehr vereinfacht.

Bei zweckmäßiger Ausgestaltung der Befestigung der Filterpatronen an der Gehäusewand des Filtergehäuses kann das Auswechseln mit wenigen Handgriffen erfolgen. Bei der bevorzugten Ausführungsform ist jede der Filterpatronen durch einen Schraub- oder Bajonettverschluß an der Gehäusewand befestigt. Die für eine derartige Befestigungseinrichtung erforderlichen Formschlussgestaltungen an der Gehäusewand des Filtergehäuses werden vorzugsweise nicht unmittelbar an dieser selbst, sondern an in sie eingesetzten Halterungsringen ausgebildet. Durch diese Maßnahme wird die Herstellung des Filtergehäuses vereinfacht.

Weitere Merkmale und Vorteile der Erfindung ergeben sich aus der folgenden Beschreibung einer bevorzugten Ausführungsform und aus den beigefügten Zeichnungen, auf die Bezug genommen wird. In den Zeichnungen zeigen:
Figur 1 eine schematische Perspektivansicht eines Filtergehäuses mit durch eine Gehäusewand eingesetzten Filterpatronen; und
Figur 2 einen Schnitt durch eine Filterpatrone und die benachbarten Wandungsteile des Filtergehäuses.

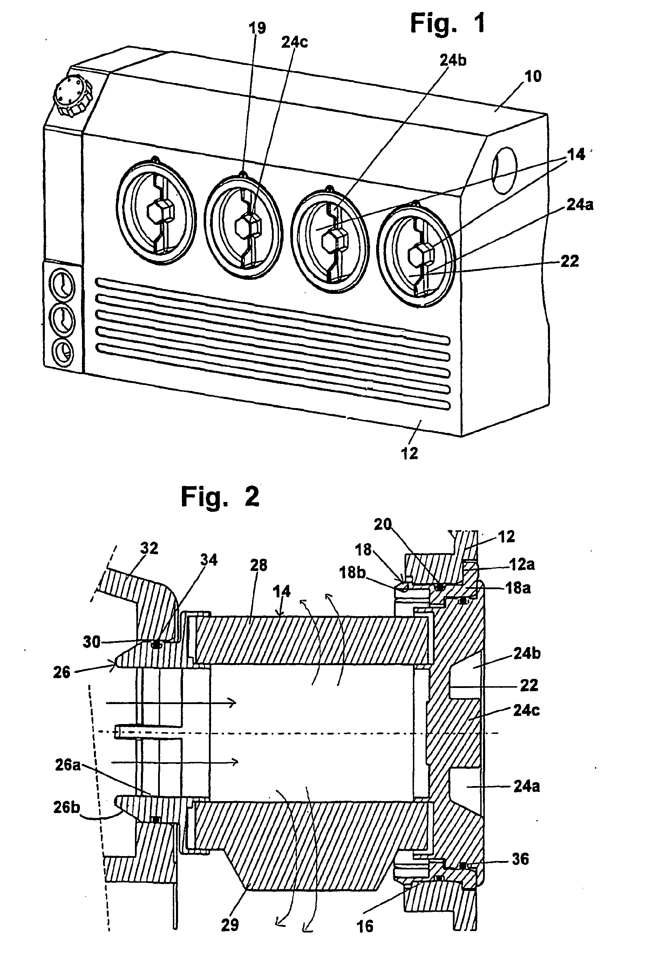

Das in Figur 1 gezeigt Filtergehäuse 10 gehört zu einer ölüberfluteten Drehschieber-Vakuumpumpe (nicht gezeigt) und ist seitlich an dem Pumpenaufbau angesetzt. Das allgemein quaderförmige Filtergehäuse 10 hat eine außenseitige Gehäusewand 12, durch die vier Filterpatronen 14 eingesetzt sind. Die Filterpatronen 14 sind an der Gehäusewand 12 unmittelbar zugänglich. Jede Filterpatrone 14 ist durch einen Bajonettverschluß oder Schraubverschluß lösbar sowie mediendicht an der Gehäusewand 12 befestigt.

Die Gehäusewand 12 weist für jede Filterpatrone 14 eine kreisrunde Durchgangsöffnung 16 auf. In jede Durchgangsöffnung 16 ist ein Halterungsring 18 eingesetzt. Der Halterungsring 18 hat einen kurzen hohlzylindrischen Stutzen mit einer Umfangsnut, in die ein Dichtring 20 eingesetzt ist. Ferner hat der Halterungsring 18 einen Ringflansch 18a, der bündig in eine entsprechende Ausnehmung 12a der Gehäusewand 12 eingesetzt ist. Der Halterungsring 18 ist ferner mit Rastelementen 18b versehen, die an der Innenseite der Gehäusewand 12 angreifen, so daß der Halterungsring 18 durch Ringflansch 18a und die Rastelemente 18b in der Gehäusewand 12 festgelegt ist. Die definierte Drehstellung jedes Halterungsrings 18 in der zugehörigen Durchgangsöffnung 16 wird durch einen angeformten Nocken 19 bestimmt, der in eine entsprechende Kerbe der Durchgangsöffnung 16 eingreift.

Der Halterungsring 18 nimmt ein äußeres Endstück 22 der Filterpatrone 14 auf und ist innenseitig mit Formschlussgestaltungen versehen, die mit entsprechenden äußeren Formschlussgestaltungen an dem Endstück 22 in Form eines Schraub- oder Bajonettverschlusses zusammenwirken. Der Verschluß hat eine Steigung, die bei Drehung der Filterpatrone 14 zugleich eine geringe axiale Bewegung erzwingt. Ferner hat er einen Anschlag, der in der Endstellung der Filterpatrone 14 eine definierte Drehstellung derselben gewährleistet. An dem Endstück 22 ist ferner außenseitig eine Handhabe 24a, 24b in Form von radialen Rippen zwischen einem zentralen Sechskant 24c, an dem bei Bedarf ein Werkzeug angesetzt werden kann, angeformt. Zwischen dem äußeren Endstück 22 und einem inneren, allgemein ringförmigen Endstück 26 ist ein hohlzylindrischer Filterkörper 28 der Filterpatronen 14 angeordnet. Das Endstück 26 ist in eine Durchgangsöffnung 30 einer innenseitigen Wandung 32 des Filtergehäuses 10, die der Gehäusewand 12 gegenüber liegt, eingesetzt. Das Endstück 26 hat einen allgemein hohlzylindrischen Führungskragen 26a, der eine Umfangsnut aufweist, in die ein Dichtring 34 eingesetzt ist. Der Führungskragen 26a ist zu seinem freien axialen Ende hin unter Ausbildung von Führungsflächen 26b verjüngt. Diese Führungsflächen 26b erleichtern die Einführung des Endstücks 26 in die Durchgangsöffnung 30 der Wandung 32 von der Außenseite der Gehäusewand 12 her. Auch das äußere Endstück 22 ist mit einer Umfangsnut versehen, in die ein Dichtring 36 eingesetzt ist. Dieser Dichtring 36 dichtet am Innenumfang des Halterungsrings 18b ab. Der Dichtring 34 dichtet am Innenumfang der Durchgangsöffnung 30 in der Wandung 32 des Filtergehäuses 10 ab. Jede Filterpatrone 14 hat an ihrem Filterkörper 28 einen Tropfensammler 29, der bei korrekter Einbaustellung senkrecht nach unten ragt. Zum Austauschen der Filterpatronen 14 werden die betreffenden Endstücke 22 an der Handhabe 24a, 24b erfaßt und um 90° entgegen dem Uhrzeigersinn gedreht, wodurch der Schraub- oder Bajonettverschluß gelöst wird. Bei festem Sitz einer Filterpatrone kann ein herkömmliches Werkzeug an dem Sechskant 24c angesetzt werden. Bei der Drehung der Filterpatrone 14 wird sie zugleich axial bewegt, wodurch eine Gleitbewegung der Dichtringe 34, 36 auf ihren Dichtflächen erzwungen wird. Anschließend wird jede Filterpatrone 14 axial aus dem Filtergehäuse 10 herausgezogen. Eine neue Filterpatrone wird durch den Halterungsring 18 eingeführt und gegen die Wandung 32 vorgeschoben; die Führungsflächen 26b treffen auf die innere Berandung der Durchgangsöffnung 30 und führen das Endstück 26 selbsttätig in die Durchgangsöffnung 30 hinein. Mit einer Drehung des äußeren Endstücks 22 um 90° im Uhrzeigersinn bis zum Anschlag wird der Montagevorgang für jede Filterpatrone abgeschlossen. In der so erreichten Drehstellung jeder Filterpatrone 14 ist ihr Tropfensammler 29 senkrecht nach unten gerichtet, so daß eine optimale Funktion gewährleistet ist.

## Patentansprüche

1. Ölabscheider für ölüberflutete Pumpen, insbesondere Drehschieber-Vakuumpumpen, mit einem Filtergehäuse (10) und mehreren darin angeordneten Filterpatronen (14), die von dem Fördermedium durchströmt werden, wobei die Filterpatronen (14) durch je eine Öffnung (16) in einer äußeren Gehäusewand (12) des Filtergehäuses (10) eingesetzt und an der Gehäusewand (12) lösbar sowie mediendicht befestigt sind und die Öffnungen (16) mediendicht verschließen.

2. Ölabscheider nach Anspruch 1, **dadurch gekennzeichnet, daß** die Filterpatronen (14) durch je einen Schraub- oder Bajonettverschluß an der Gehäusewand (12) befestigt sind.

3. Ölabscheider nach Anspruch 1 oder 2, **dadurch gekennzeichnet, daß** die Öffnungen (16) von je einem in die Gehäusewand (12) eingesetzten Halterungsring (18) berandet sind.

4. Ölabscheider nach Anspruch 2 und Anspruch 3, **dadurch gekennzeichnet, daß** an dem Halterungsring (18) Formschlußgestaltungen für den Schraub- oder Bajonettverschluß ausgebildet sind.

5. Ölabscheider nach Anspruch 4, **dadurch gekennzeichnet, daß** die Halterungsringe (18) durch Rastelemente, die an der Innenseite der Gehäusewand (12) angreifen, an dieser befestigt sind.

6. Ölabscheider nach Anspruch 4 oder 5, **dadurch gekennzeichnet, daß** die Halterungsringe (18) je einen bündig in die Außenfläche der Gehäusewand (12) eingelassenen Montageflansch aufweisen.

7. Ölabscheider nach einem der Ansprüche 3 bis 6, **dadurch gekennzeichnet, daß** der Halterungsring (18) durch wenigstens einen Dichtring (20) an der Gehäusewand (12) abgedichtet ist.

8. Ölabscheider nach Anspruch 7, **dadurch gekennzeichnet, daß** der Dichtring (20) in einer Umfangsnut des Halterungsrings (18) eingesetzt ist.

9. Ölabscheider nach einem der Ansprüche 3 bis 8, **dadurch gekennzeichnet, daß** die Filterpatronen (14) je ein äußeres stirnseitiges Endstück aufweisen, das in den Halterungsring (18) eingesetzt ist.

10. Ölabscheider nach Anspruch 9, **dadurch gekennzeichnet, daß** das Endstück durch wenigstens einen Dichtring (36) an dem Halterungsring (18) abgedichtet ist.

11. Ölabscheider nach Anspruch 10, **dadurch gekennzeichnet, daß** der Dichtring (36) in eine Umfangsnut des Endstücks eingesetzt ist.

12. Ölabscheider nach einem der vorstehenden Ansprüche, **dadurch gekennzeichnet, daß** jede Filterpatrone (14) ein inneres stimseitiges Endstück (26) aufweist, das in eine Öffnung (30) einer inneren Gehäusewand (32) des Filtergehäuses (10) eingesetzt ist.

13. Ölabscheider nach Anspruch 12, **dadurch gekennzeichnet, daß** das innere Endstück (26) einen hohlzylindrischen Führungskragen aufweist, der in die Öffnung (30) der inneren Gehäusewand (32) eingreift.

14. Ölabscheider nach Anspruch 13, **dadurch gekennzeichnet, daß** der Führungskragen wenigstens eine Umfangsnut aufweist, in die ein Dichtring (34) eingesetzt ist.

15. Ölabscheider nach Anspruch 13 oder 14, **dadurch gekennzeichnet, daß** der Führungskragen zu seinem freien axialen Ende hin unter Ausbildung von Führungsflächen (26b) verjüngt ist.

16. Ölabscheider nach einem der Ansprüche 9 bis 15, **dadurch gekennzeichnet, daß** an dem äußeren Endstück eine Handhabe (24b) angeformt ist.

17. Ölabscheider nach einem der Ansprüche 2 bis 16, **dadurch gekennzeichnet, daß** der Schraub- oder Bajonettverschluß eine Steigung aufweist, die eine axiale Bewegung der Filterpatrone (14) bei ihrer Drehung erzwingt.

18. Ölabscheider nach einem der Ansprüche 2 bis 17, **dadurch gekennzeichnet, daß** der Schraub- oder Bajonettverschluß einen Anschlag aufweist, der eine definierte Drehstellung der Filterpatrone (14) gewährleistet.

19. Ölabscheider nach den Ansprüchen 3 und 18, **dadurch gekennzeichnet, daß** der Halterungsring (18) durch Verdrehsicherungsmittel in einer definierten Einbaustellung an der Gehäusewand (12) gehalten ist.

## Claims

1. An oil separator for pumps which are flooded with oil, in particular rotary-vane type vacuum pumps, with a filter housing (10) and several filter cartridges (14) arranged therein, through which the conveyance medium flows, wherein the filter cartridges (14) are in each case inserted through an opening (16) in an outer housing wall (12) of the filter housing (10) and are attached to the housing wall (12) in a detachable manner and in such a manner that they are sealed against the medium, and the openings (16) close in such a manner that they are sealed against the medium.

2. An oil separator according to claim 1, **characterised in that** the filter cartridges (14) are attached in each case by a bolt or bayonet lock to the housing wall (12).

3. An oil separator according to claim 1 or 2, **characterised in that** the openings (16) are bordered in each case by a retaining ring (18) inserted into the housing wall (12).

4. An oil separator according to claim 2 and claim 3, **characterised in that** on the retaining ring (18) form-fit structures are provided for the bolt or bayonet lock.

5. An oil separator according to claim 4, **characterised in that** the retaining rings (18) are attached via latch elements which grip on the inner side of the housing wall (12).

6. An oil separator according to claim 4 or 5, **characterised in that** the retaining rings (18) each comprise a mounting flange which is integrated flush into the outer surface of the housing wall (12).

7. An oil separator according to any one of claims 3 to 6, **characterised in that** the retaining ring (18) is sealed by at least one sealing ring (20) on the housing wall (12).

8. An oil separator according to claim 7, **characterised in that** the sealing ring (20) is inserted in a peripheral groove of the retaining ring (18).

9. An oil separator according to any one of claims 3 to 8, **characterised in that** the filter cartridges (14) each comprise an outer end piece on the front side, which is inserted into the retaining ring (18).

10. An oil separator according to claim 9, **characterised in that** the end piece is sealed by at least one sealing ring (36) on the retaining ring (18).

11. An oil separator according to claim 10, **characterised in that** the sealing ring (36) is inserted into a peripheral groove in the end piece.

12. An oil separator according to any one of the above claims, **characterised in that** each filter cartridge (14) comprises an inner end piece (26) on the front side, which is inserted into an opening (30) of an inner housing wall (32) of the filter housing (10).

13. An oil separator according to claim 12, **characterised in that** the inner end piece (26) comprises a hollow cylindrical guide collar, which grips into the opening (30) of the inner housing wall (32).

14. An oil separator according to claim 13, **characterised in that** the guide collar comprises at least one peripheral groove, which is inserted into a sealing ring (34).

15. An oil separator according to either of claims 13 or 14, **characterised in that** the guide collar is tapered towards its free axial end to form guide surfaces (26b).

16. An oil separator according to any one of claims 9 to 15, **characterised in that** a handle (24b) is formed on the outer end piece.

17. An oil separator according to any one of claims 2 to 16, **characterised in that** the bolt or bayonet lock comprises an inclination which forces an axial movement of the filter cartridge (14) when it is rotated.

18. An oil separator according to any one of claims 2 to 17, **characterised in that** the bolt or bayonet lock comprises a stop which guarantees a defined rotation position of the filter cartridge (14).

19. An oil separator according to claims 3 and 18, **characterised in that** the retaining ring (18) is retained in a defined installation position on the housing wall (12) by rotation securing means.

## Revendications

1. Séparateur d'huile pour pompes à bain d'huile, en particulier pompes à vide à tiroirs rotatifs, avec un carter de filtre (10) et plusieurs cartouches de filtre (14) disposées à l'intérieur de celui-ci et traversées par le milieu refoulé, lesdites cartouches de filtre (14) étant respectivement mises en place dans une paroi extérieure (12) du carter de filtre (10) par une ouverture (16), fixées sur la paroi de carter (12) de manière amovible et étanche au milieu, et obturant les ouvertures (16) en assurant leur étanchéité au milieu.

2. Séparateur d'huile selon la revendication 1, **caractérisé en ce que** les cartouches de filtre (14) sont respectivement fixées sur la paroi de carter (12) par un joint à vis ou à baïonnette.

3. Séparateur d'huile selon la revendication 1 ou 2, **caractérisé en ce que** les ouvertures (16) sont respectivement bordées d'une bague de maintien (18) mise en place dans la paroi de carter (12).

4. Séparateur d'huile selon la revendication 2 et la revendication 3, **caractérisé en ce que** des structures d'engagement par joint à vis ou à baïonnette sont profilées sur la bague de maintien (18).

5. Séparateur d'huile selon la revendication 4, **caractérisé en ce que** les bagues de maintien (18) sont fixées sur la face intérieure de la paroi de carter (12) par des éléments d'enclenchement qui s'engagent dans celle-ci.

6. Séparateur d'huile selon la revendication 4 ou 5, **caractérisé en ce que** les bagues de maintien (18) comportent chacune une bride de montage encastrée dans la paroi de carter (12) et affleurant à la surface extérieure de celle-ci.

7. Séparateur d'huile selon l'une des revendications 3 à 6, **caractérisé en ce que** la bague de maintien (18) est rendue étanche sur la paroi de carter (12) par une bague d'étanchéité (20) au moins.

8. Séparateur d'huile selon la revendication 7, **caractérisé en ce que** la bague d'étanchéité (20) est mise en place dans une rainure circonférentielle de la bague de maintien (18).

9. Séparateur d'huile selon l'une des revendications 3 à 8, **caractérisé en ce que** les cartouches de filtre (14) comportent chacune une pièce terminale frontale extérieure, mise en place dans la bague de maintien (18).

10. Séparateur d'huile selon la revendication 9, **caractérisé en ce que** la pièce terminale est rendue étanche sur la bague de maintien (18) par une bague d'étanchéité (36) au moins.

11. Séparateur d'huile selon la revendication 10, **caractérisé en ce que** la bague d'étanchéité (36) est mise en place dans une rainure circonférentielle de la pièce terminale.

12. Séparateur d'huile selon l'une des revendications précédentes, **caractérisé en ce que** chaque cartouche de filtre (14) comporte une pièce terminale frontale intérieure (26), mise en place dans une ouverture (30) d'une paroi intérieure (32) du carter de filtre (10).

13. Séparateur d'huile selon la revendication 12, **caractérisé en ce que** la pièce terminale intérieure (26) comporte une collerette de guidage cylindrique creuse s'engageant dans l'ouverture (30) de la paroi intérieure de carter (32).

14. Séparateur d'huile selon la revendication 13, **caractérisé en ce que** la collerette de guidage comporte une rainure circonférentielle au moins, dans laquelle est insérée une bague d'étanchéité (34).

15. Séparateur d'huile selon la revendication 13 ou 14, **caractérisé en ce que** la collerette de guidage est effilée vers son extrémité axiale libre en formant une surface de guidage (26b).

16. Séparateur d'huile selon l'une des revendications 9 à 15, **caractérisé en ce qu'**une prise (24b) est formée sur la pièce terminale extérieure.

17. Séparateur d'huile selon l'une des revendications 2 à 16, **caractérisé en ce que** le joint à vis ou à baïonnette présente un pas forçant un mouvement axial de la cartouche de filtre (14) lors de sa rotation.

18. Séparateur d'huile selon l'une des revendications 2 à 17, **caractérisé en ce que** le joint à vis ou à baïonnette présente une butée fixant une position de rotation définie de la cartouche de filtre (14).

19. Séparateur d'huile selon les revendications 3 et 18, **caractérisé en ce que** la bague de maintien (18) est maintenue dans une position de montage définie sur la paroi de carter (12) par des moyens de blocage en rotation.
